# EUROPÄISCHE PATENTSCHRIFT

(11) **EP 3 885 026 B1**
(45) Veröffentlichungstag und Bekanntmachung des Hinweises auf die Patenterteilung: **18.12.2024**
(21) Anmeldenummer: 21162991.0
(22) Anmeldetag: 16.03.2021
(51) Int. Cl.: B01D 46/48, B01D 50/00, B01D 46/42

(54) **PARTIKELAUSTRAGSVORRICHTUNG, FILTERANORDNUNG UND VERFAHREN**
PARTICULATE DISCHARGE APPARATUS, FILTER ASSEMBLY AND METHOD
DISPOSITIF DE DISTRIBUTION DES PARTICULES, AGENCEMENT DE FILTRE ET PROCÉDÉ

(30) Priorität: 24.03.2020 DE 102020108055
(43) Veröffentlichungstag der Anmeldung: 29.09.2021
(73) Patentinhaber: MANN+HUMMEL GmbH, 71636 Ludwigsburg (DE)
(72) Erfinder: RUHLAND, Klaus-Dieter, 67149 Meckenheim (DE); KAUFMANN, Michael, 67149 Meckenheim (DE)
(74) Vertreter: Mann + Hummel Intellectual Property

(56) Entgegenhaltungen:
- WO-A2-2007/149388
- CN-A- 103 775 261
- DE-A1- 4 240 048
- KR-A- 20180 070 986
- US-A- 4 870 992

## Beschreibung

### Technisches Gebiet

Die vorliegende Erfindung betrifft eine Partikelaustragsvorrichtung für eine Filteranordnung, eine Filteranordnung mit einer derartigen Partikelaustragsvorrichtung und ein Verfahren zum Herstellen einer derartigen Partikelaustragsvorrichtung.

### Stand der Technik

Im Kraftfahrzeugbereich, insbesondere im Bereich von Lastkraftwagen, Baumaschinen oder landwirtschaftlichen Fahrzeugen, das heißt bei sogenannten "Heavy Duty"-Anwendungen, finden oftmals sogenannte Rundluftfilteranordnungen mit zentrifugaler Vorabscheidung von Partikeln oder sogenannte Zyklonabscheider Anwendung. Mit Hilfe der Vorabscheidung der Partikel ist es möglich, die Partikelbeladung des eigentlichen Filterelements gering zu halten. Hierdurch erhöht sich die Lebensdauer des verwendeten Filterelements.

Die DE 42 40 048 A1 zeigt ein Staubaustragsventil. Die EP 2 703 059 A2 zeigt eine Filteraufnahme mit einem Gehäuse, welches einen Staubaustrag umfasst, an dem eine Partikelaustragsvorrichtung in Form eines Lippenventils, insbesondere in Form eines sogenannten "DuckbillValves", vorgesehen ist. Dieses Lippenventil kann beispielsweise mit Hilfe eines pulsierenden Betriebs einer an die Filteraufnahme gekoppelten Brennkraftmaschine geöffnet werden, um die Partikel aus der Filteraufnahme auszutragen.

Die WO 2011/124675 A1 beschreibt einen Zyklonabscheider, an dessen Gehäuse ebenfalls ein Staubaustrag mit einem derartigen Lippenventil vorgesehen ist.

### Offenbarung der Erfindung

Es ist daher Aufgabe der Erfindung, eine verbesserte Partikelaustragsvorrichtung für eine Filteranordnung zur Verfügung zu stellen.

Demgemäß wird eine Partikelaustragsvorrichtung für eine Filteranordnung vorgeschlagen. Die Partikelaustragsvorrichtung umfasst ein Gehäuse und zumindest eine einteilig mit dem Gehäuse ausgebildete Partikelaustragsklappe, wobei die zumindest eine Partikelaustragsklappe zum Austragen von Partikeln aus der Filteranordnung von einem geschlossenen Zustand in einen geöffneten Zustand verbringbar ist, und wobei die zumindest eine Partikelaustragsklappe in dem geschlossenen Zustand an einem zumindest teilweise um eine Symmetrieachse des Gehäuses umlaufenden Ventilsitz des Gehäuses anliegt, wobei die Symmetrieachse parallel zu einer Schwerkraftrichtung orientiert ist und die Partikelaustragsvorrichtung ferner einen Boden, welcher das Gehäuse stirnseitig zumindest teilweise verschließt, und genau eine Partikelaustragsklappe umfasst, welche einteilig mit dem Boden verbunden ist und in dem geschlossenen Zustand senkrecht zu der Symmetreiachse orientiert ist, wobei die Partikelaustragsvorrichtung ein aus einem Elastomer gefertigtes einteiliges Kunststoffspritzgussbauteil ist.

Die Partikelaustragsvorrichtung kann auch als Partikelausschleusvorrichtung, Partikelaustragsventil oder Staubaustragsventil bezeichnet werden. Die Partikelaustragsvorrichtung ist insbesondere dazu geeignet, Partikel aus der Filteranordnung, insbesondere aus einem Filtergehäuse der Filteranordnung, auszutragen oder auszuschleusen. Das Gehäuse der Partikelaustragsvorrichtung ist vorzugsweise rohrförmig und im Wesentlichen rotationssymmetrisch zu der Symmetrieachse aufgebaut. Die Symmetrieachse ist vorzugsweise parallel zu einer Schwerkraftrichtung orientiert oder stimmt mit dieser überein.

"Einteilig" oder "einstückig" bedeutet vorliegend, dass das Gehäuse und die Partikelaustragsklappe ein gemeinsames Bauteil bilden und nicht aus unterschiedlichen Bauteilen aufgebaut sind. Das heißt insbesondere, dass das Gehäuse und die Partikelaustragsklappe nicht beschädigungsfrei voneinander trennbar sind. Insbesondere sind das Gehäuse und die Partikelaustragsklappe materialeinstückig ausgebildet. "Materialeinstückig" bedeutet vorliegend, dass das Gehäuse und die Partikelaustragsklappe durchgehend aus demselben Material gefertigt sind.

Die Partikelaustragsklappe ist bevorzugt ein flächiges oder ebenes Bauteil, das in dem geschlossenen Zustand senkrecht zu der Symmetrieachse orientiert ist. In dem geschlossenen Zustand ist die Partikelaustragsklappe bevorzugt innerhalb, insbesondere zumindest teilweise innerhalb, des Gehäuses angeordnet. Vorzugsweise wird die Partikelaustragsklappe bei der Inbetriebnahme einer an die Filteranordnung angeschlossenen Brennkraftmaschine von dem geöffneten Zustand in den geschlossenen Zustand verbracht. Das heißt, die Partikelaustragsklappe wird durch einen von der Brennkraftmaschine erzeugten Unterdruck von dem geöffneten Zustand in den geschlossenen Zustand verbracht. Die Partikelaustragsklappe kann beliebig oft von dem geschlossenen Zustand in den geöffneten Zustand und umgekehrt verbracht werden. Der geöffnete Zustand ist dabei bevorzugt ein Ausgangszustand der Partikelaustragsklappe. Das heißt, solange die Brennkraftmaschine nicht in Betrieb ist, befindet sich die Partikelaustragsklappe in dem geöffneten Zustand.

Der Ventilsitz ist insbesondere ringförmig. Der Ventilsitz kann nicht erfindungsgemäß vollständig um die Symmetrieachse umlaufen. In diesem Fall ist der Ventilsitz ringförmig geschlossen. Der Ventilsitz kann jedoch auch nur teilweise um die Symmetrieachse umlaufen. In diesem Fall ist der Ventilsitz umfänglich nicht geschlossen. Beispielsweise kann der Ventilsitz entlang einer Umfangsrichtung des Gehäuses betrachtet lediglich zu zwei Dritteln um das Gehäuse umlaufen. Der Ventilsitz ist insbesondere senkrecht zu der Symmetrieachse orientiert. Unter "senkrecht" kann vorliegend insbesondere ein Winkel von 90° ± 10°, bevorzugt von 90° ± 5°, weiter bevorzugt von 90° ± 3°, weiter bevorzugt von 90° ± 1 °, weiter bevorzugt von genau 90° zu verstehen sein.

Dadurch, dass der zumindest teilweise um die Symmetrieachse des Gehäuses umlaufende Ventilsitz vorgesehen ist, an dem die Partikelaustragsklappe in dem geschlossenen Zustand anliegt, kann im Vergleich zu einem wie zuvor erläuterten Lippenventil entlang der Symmetrieachse betrachtet ein geringerer Bauraum der Partikelaustragsvorrichtung erreicht werden.

In Ausführungsformen ist die zumindest eine Partikelaustragsklappe zum Verbringen derselben von dem geschlossenen Zustand in den geöffneten Zustand elastisch verformbar. Unter einer "elastischen Verformbarkeit" ist vorliegend eine reversible Verformbarkeit zu verstehen. Das heißt, die Partikelaustragsklappe kann beliebig oft von dem geschlossenen Zustand in den geöffneten Zustand und umgekehrt verbracht werden. Bei dem Verbringen der Partikelaustragsklappe von dem geschlossenen Zustand in den geöffneten Zustand wird die Partikelaustragsklappe insbesondere bogenförmig verbogen oder gekrümmt. Hierdurch wird ein großer Auslassquerschnitt für die auszutragenden Partikel erreicht.

In Ausführungsformen ist die zumindest eine Partikelaustragsklappe mit Hilfe einer auf die zumindest eine Partikelaustragsklappe wirkenden Gewichtskraft der Partikel von dem geschlossenen Zustand in den geöffneten Zustand verbringbar. Das heißt, die Partikelaustragsklappe verbringt sich aufgrund der Gewichtskraft der Partikel selbsttätig von dem geschlossenen Zustand in den geöffneten Zustand. Sobald die Gewichtskraft der Partikel nicht mehr auf der Partikelaustragsklappe wirkt, verbringt sich diese selbsttägig von dem geöffneten Zustand zurück in den geschlossenen Zustand. Das Verbringen von dem geöffneten Zustand in den geschlossenen Zustand kann auch durch einen von der Brennkraftmaschine erzeugten Unterdruck bewerkstelligt oder zumindest unterstützt werden. Ferner kann die Partikelaustragsklappe auch zusätzlich oder optional durch einen Lastwechsel einer an die Filteranordnung angeschlossenen Brennkraftmaschine von dem geschlossenen Zustand in den geöffneten Zustand und umgekehrt verbracht werden.

In nicht erfindungsgemäßen Ausführungsformen umfasst die Partikelaustragsvorrichtung ferner eine erste Partikelaustragsklappe, eine zweite Partikelaustragsklappe und einen Mittelsteg, welcher die erste Partikelaustragsklappe und die zweite Partikelaustragsklappe einteilig mit dem Gehäuse verbindet. Vorzugsweise ist der Mitelsteg senkrecht zu der Symmetrieachse angeordnet. Der Mittelsteg verläuft quer durch das Gehäuse, wobei die beiden Partikelaustragsklappen über Gelenkabschnitte mit dem Mittelsteg verbunden sind. Insbesondere umfasst das Gehäuse einen rohrförmigen Basisabschnitt, mit dem der Mittelsteg einteilig, insbesondere materialeinstückig, verbunden ist.

Erfindungsgemäß umfasst die Partikelaustragsvorrichtung ferner einen Boden, welcher das Gehäuse stirnseitig zumindest teilweise verschließt, und genau eine Partikelaustragsklappe, welche einteilig mit dem Boden verbunden ist. Der Boden verschließt etwa ein Drittel einer Querschnittsfläche des Gehäuses beziehungsweise des Basisabschnitts des Gehäuses. Demzufolge verdeckt die Partikelaustragsklappe in dem geschlossenen Zustand zwei Drittel der Querschnittsfläche des Gehäuses beziehungsweise des Basisabschnitts des Gehäuses. Die Partikelaustragsklappe kann über den zuvor erwähnten Gelenkabschnitt mit dem Boden verbunden sein. Hierdurch wird ein großer Auslassquerschnitt für die auszutragenden Partikel erreicht.

In Ausführungsformen ist die Partikelaustragsvorrichtung ein aus einem Elastomer gefertigtes einteiliges Kunststoffspritzgussbauteil. Beispielsweise kann die Partikelaustragsvorrichtung aus Gummi, aus einem Ethylen-Propylen-Dien-Kautschuk (EPDM), aus einem Acrylnitril-Butadien-Kautschuk (NBR) oder aus einem thermoplastischen Elastomer (TPE), wie beispielsweie einem thermoplastischen Polyurethan (TPU), gefertigt sein. Mit Hilfe der Verwendung der zuvor erwähnten Materialien ist die Partikelaustragsvorrichtung, und insbesondere die Partikelaustragsklappe, elastisch verformbar.

In nicht erfindungsgemäßen Ausführungsformen läuft der Ventilsitz vollständig um die Symmetrieachse um. Das heißt, der Ventilsitz ist, wie zuvor erwähnt, ringförmig geschlossen. Alternativ kann der Ventilsitz auch nur teilweise um die Symmetrieachse umlaufen. Auch in diesem Fall kann derVentilsitz ringförmig sein. DerVentilsitz ist jedoch dann umfänglich offen.

Ferner wird eine Filteranordnung mit einem Filtergehäuse und einer derartigen Partikelaustragsvorrichtung vorgeschlagen, welche an einem Partikelaustragsstutzen des Filtergehäuses angeordnet ist.

Das Filtergehäuse umfasst vorzugsweise einen Filtergehäusetopf und einen Filtergehäusedeckel, der lösbar an dem Filtergehäusetopf befestigt ist. In dem Filtergehäusetopf ist ein Filterelement aufgenommen. Das Filterelement kann durch ein Abnehmen des Filtergehäusedeckels von dem Filtergehäusetopf ausgetauscht werden. An dem Filtergehäusedeckel ist vorzugsweise der Partikelaustragsstutzen vorgesehen. Die Partikelaustragsvorrichtung ist auf den Partikelaustragsstutzen aufgesteckt. Die elastische Verformbarkeit der Partikelaustragsvorrichtung ermöglicht ein einfaches Aufstecken derselben auf den Partikelaustragsstutzen. Die Filteranordnung ist insbesondere dazu eingerichtet, Fluide, wie beispielsweise Luft, oder andere Gase, Flüssigkeiten, insbesondere flüssige Betriebsmittel eines Fahrzeugs, insbesondere eines Kraftfahrzeugs, wie Öl, Wasser, Benzin, Kerosin oder Harnstofflösung, zu filtern. Insbesondere ist die Filteranordnung eine Luftfilteranordnung. Die Filteranordnung kann Anwendung in Kraftfahrzeugen, Wasserfahrzeugen, Schienenfahrzeugen, landwirtschaftlichen Fahrzeugen, Baumaschinen, Luftfahrzeugen oder dergleichen finden. Ferner kann die Filteranordnung auch bei immobilen Anwendungen, wie beispielsweise in der Gebäudetechnik, eingesetzt werden.

Weiterhin wird ein Verfahren zum Herstellen einer wie zuvor erläuterten Partikelaustragsvorrichtung für eine Filteranordnung vorgeschlagen. Das Verfahren umfasst die Schritte: a) Herstellen eines Gehäuses, und b) Herstellen zumindest einer einteilig mit dem Gehäuse ausgebildeten Partikelaustragsklappe.

Die Schritte a) und b) werden gleichzeitig vorzugsweise mit Hilfe eines Kunststoffspritzgusswerkzeugs durchgeführt. Dabei wird das Gehäuse einteilig, insbesondere materialeinstückig, mit der Partikelaustragsklappe hergestellt. Dies schließt jedoch nicht aus, dass für das Gehäuse und für die Partikelaustragsklappe unterschiedliche, beispielsweise unterschiedlich elastische; Materialien verwendet werden. Hierzu kann beispielsweise ein Zweikomponenten-Kunststoffspritzgussverfahren eingesetzt werden.

Nach oder bei dem Schritt b) wird die zumindest eine Partikelaustragsklappe mit Hilfe eines trennenden Fertigungsverfahrens von einem Ventilsitz des Gehäuses getrennt. Beispielsweise kann die Partikelaustragsklappe mit Hilfe einer Schneide oder eines Messers von dem Ventilsitz getrennt werden. Alternativ kann auch ein Lasertrennverfahren oder ein Wasserstrahltrennverfahren eingesetzt werden. Alternativ kann die Partikelaustragsvorrichtung auch derart hergestellt werden, dass ein Trennen der Partikelaustragsklappe von dem Ventilsitz nicht erforderlich ist. Hierzu kann beispielsweise in dem Kunststoffspritzgusswerkzeug ein Spalt zwischen der Partikelaustragsklappe und dem Ventilsitz vorgesehen sein. In diesem Fall ist ein Trennen der Partikelaustragsklappe von dem Ventilsitz nicht erforderlich. Die Partikelaustragsvorrichtung kann dann nach dem Entformen aus dem Kunststoffspritzgusswerkzeug sofort verwendet werden.

### Kurze Beschreibung der Zeichnungen

Es zeigt dabei:
- Fig. 1:: eine schematische perspektivische Ansicht einer Ausführungsform einer Filteranordnung;
- Fig. 2:: eine schematische perspektivische Ansicht einer nicht erfindungsgemäßen Ausführungsform einer Partikelaustragsvorrichtung für die Filteranordnung gemäß Fig. 1;
- Fig. 3:: eine schematische Schnittansicht der Partikelaustragsvorrichtung gemäß Fig. 2;
- Fig. 4:: eine schematische perspektivische Ansicht einer erfindungsgemäßen Ausführungsform einer Partikelaustragsvorrichtung für die Filteranordnung gemäß Fig. 1;
- Fig. 5:: eine schematische Schnittansicht der Partikelaustragsvorrichtung gemäß Fig. 4;
- Fig. 6:: eine schematische perspektivische Ansicht einer weiteren nicht erfindungsgemäßen Ausführungsform einer Partikelaustragsvorrichtung für die Filteranordnung gemäß Fig. 1;
- Fig. 7:: eine schematische Schnittansicht der Partikelaustragsvorrichtung gemäß Fig. 6; und
- Fig. 8:: ein schematisches Blockdiagramm einer Ausführungsform eines Verfahrens zum Herstellen einer Partikelaustragsvorrichtung für die Filteranordnung gemäß Fig. 1.

In den Figuren sind gleiche oder funktionsgleiche Elemente, sofern nichts anderes angegeben ist, mit denselben Bezugszeichen versehen worden.

### Ausführungsform(en) der Erfindung

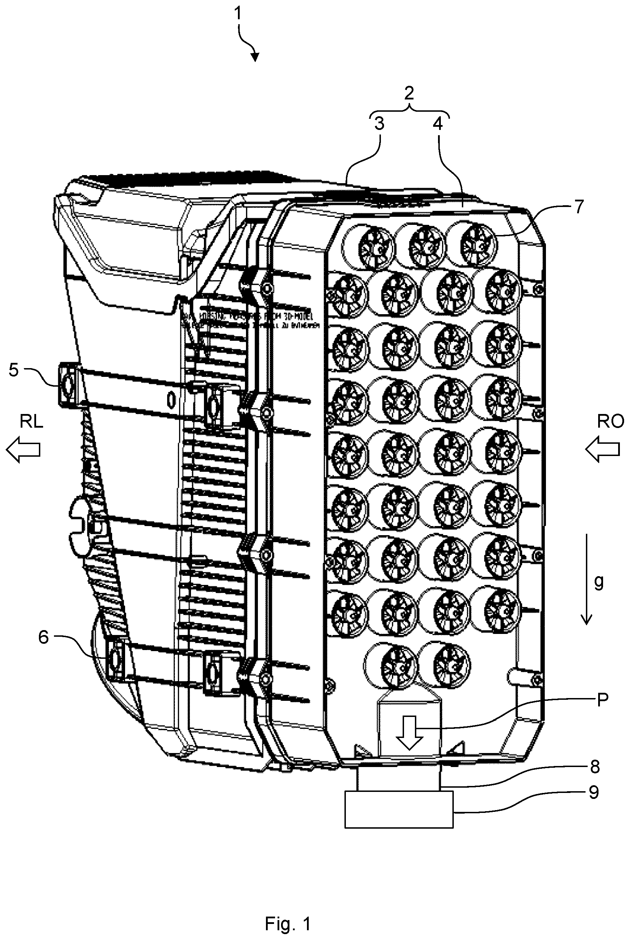

Die Fig. 1 zeigt eine schematische perspektivische Ansicht einer Ausführungsform einer Filteranordnung 1. Die Filteranordnung 1 kann geeignet sein, Wasser, Harnstofflösung, Luft, Öl oder Kraftstoffe, wie Dieselkraftstoff, Kerosin oder Benzin, zu filtern. Insbesondere findet die Filteranordnung 1 in Kraftfahrzeugen, insbesondere in Personenkraftwagen, Lastkraftwagen, Baufahrzeugen oder landwirtschaftlichen Maschinen, in Wasserfahrzeugen, in Schienenfahrzeugen oder in Luftfahrzeugen Anwendung. Weiterhin kann die Filteranordnung 1 beispielsweise in der Gebäudetechnik Anwendung finden. Bevorzugt ist die Filteranordnung 1 für einen Einsatz unter hoher Staubbelastung oder unter hoher Partikelbelastung geeignet. Die Filteranordnung 1 ist insbesondere eine Luftfilteranordnung und ist dazu geeignet, Verbrennungsluft einer Brennkraftmaschine zu filtern.

Die Filteranordnung 1 umfasst ein Filtergehäuse 2 mit einem Filtergehäusetopf 3 und einem Filtergehäusedeckel 4. Der Filtergehäusetopf 3 und der Filtergehäusedeckel 4 können beispielsweise als Kunststoffbauteile, insbesondere als Kunststoffspritzgussbauteile, ausgeführt sein. Der Filtergehäusedeckel 4 ist dabei von dem Filtergehäusetopf 3 abnehmbar und lösbar mit dem Filtergehäusetopf 3 verbunden.

Der Filtergehäusetopf 3 kann fest in oder an einem Fahrzeug, beispielsweise an einer tragenden Karosseriestruktur des Fahrzeugs, befestigt sein. Hierzu weist der Filtergehäusetopf 3 angeformte Befestigungsabschnitte 5, 6 auf. In dem Filtergehäusetopf 3 ist ein austauschbares Filterelement (nicht gezeigt) aufgenommen. Das Filterelement kann nach einem Entfernen des Filtergehäusedeckels 4 von dem Filtergehäusetopf 3 aus dem Filtergehäusetopf 3 entnommen und somit ausgetauscht werden.

Der Filtergehäusedeckel 4 umfasst eine Vielzahl an Zyklonabscheidern 7, von denen in der Fig. 1 lediglich einer mit einem Bezugszeichen versehen ist. Die Zyklonabscheider 7 sind geeignet, aus der Filteranordnung 1 zugeführter Rohluft RO Partikel P abzuscheiden. Die von den Partikeln P befreite Rohluft RO strömt dann durch das Filterelement und verlässt die Filteranordnung 1 als Reinluft RL. Die Partikel P umfassen beispielsweise kleine Steine, Staub, Sand, Erdreich, Pflanzenteile oder dergleichen. Die Zyklonabscheider 7 scheiden die Partikel P aus der Rohluft RO in der Art eines Fliehkraftabscheiders ab. Die Zyklonabscheider 7 sind mit Hilfe eines nicht gezeigten Deckels abgedeckt.

Bezüglich einer Schwerkraftrichtung g betrachtet umfasst der Filtergehäusedeckel 4 an einem untersten Punkt oder unteren Bereich einen Partikelaustragsstutzen 8 zum Austragen der Partikel P aus dem Filtergehäuse 2 beziehungsweise aus dem Filtergehäusedeckel 4. Der Partikelaustragsstutzen 8 ist rohrförmig ausgebildet und ist vorzugsweise so angeordnet, dass dieser in der Schwerkraftrichtung g verläuft. An dem Partikelaustragsstutzen 8 ist eine noch später zu erläuternde Partikelaustragsvorrichtung 9 befestigt. Die Partikelaustragsvorrichtung 9 kann auch als Partikelaustragsventil oder als Staubaustragsventil bezeichnet werden.

Im Betrieb einer Brennkraftmaschine mit einer derartigen Filteranordnung 1 ist diese an einen Ansaugtrakt der Brennkraftmaschine angeschlossen. Die Brennkraftmaschine saugt nun im Betrieb die mit den Partikeln P beladene Rohluft RO an. Die zu reinigende Rohluft RO wird mit Hilfe der Zyklonabscheider 7 weitgehend von den Partikeln P befreit, die sich schwerkraftbedingt an dem unteren Bereich des Filtergehäusedeckels 4 beziehungsweise in dem Partikelaustragsstutzen 8 sammeln.

Insofern erfolgt eine Vorabscheidung der Partikel P in der Art eines Fliehkraftabscheiders. Diese Art der Partikelabscheidung kann auch als rotative Abscheidung oder Fliehkraftabscheidung bezeichnet werden. Um die gesammelten Partikel P aus dem Filtergehäuse 2 zu entnehmen oder auszutragen, ist der Partikelaustragsstutzen 8 mit der Partikelaustragsvorrichtung 9 vorgesehen.

Mit Hilfe dieser Vorabscheidung können mehr als 80% der in der Rohluft RO enthaltenen Partikel P aus derselben abgeschieden werden. Das heißt, es kann eine Vorabscheidungseffizienz (Engl.: Pre Separation Efficiency) von mehr als 80% erzielt werden. Die so von den Partikeln P vorgereinigte Rohluft RO strömt von einer Rohseite des Filterelements auf eine Reinseite desselben. Hierbei werden mit Hilfe eines Filtermediums des Filterelements die restlichen verbleibenden Partikel P abgeschieden. Die Reinluft RL strömt dann zu der Brennkraftmaschine.

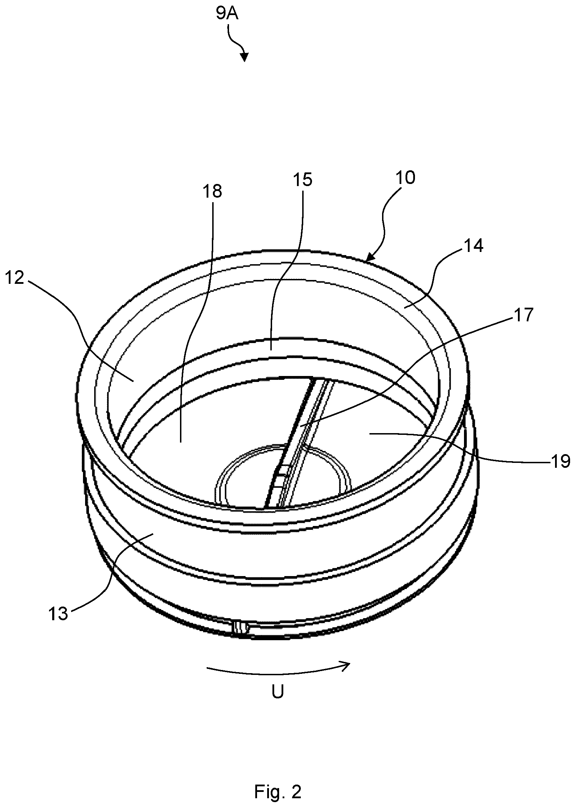

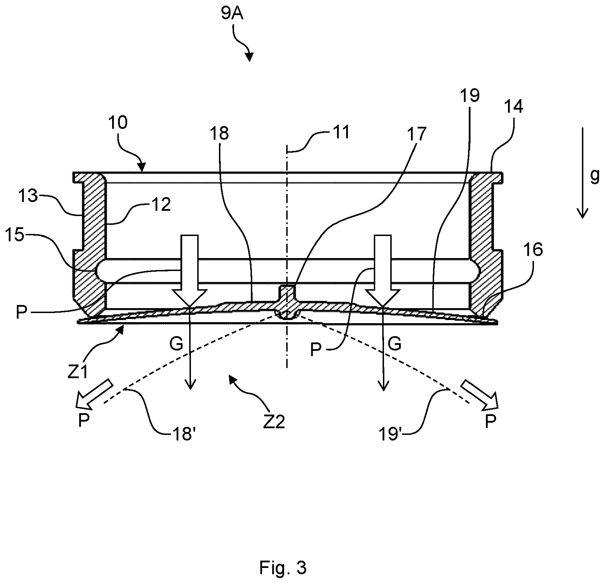

Die Fig. 2 zeigt eine schematische perspektivische Ansicht einer nicht erfindungsgemäßen Ausführungsform einer Partikelaustragsvorrichtung 9A. Die Fig. 3 zeigt eine schematische Schnittansicht der Partikelaustragsvorrichtung 9A. Nachfolgend wird auf die Fig. 2 und 3 gleichzeitig Bezug genommen.

Die Partikelaustragsvorrichtung 9A umfasst ein Gehäuse 10, das rohrförmig ausgebildet ist. Das Gehäuse 10 ist bevorzugt rotationssymmetrisch zu einer Mittel- oder Symmetrieachse 11 ausgebildet. Die Symmetrieachse 11 kann gleichzeitig eine Symmetrieachse des Partikelaustragsstutzens 8 sein. Die Symmetrieachse 11 verläuft in der Schwerkraftrichtung g oder stimmt mit dieser überein.

Das Gehäuse 10 umfasst einen rohrförmigen Basisabschnitt 12, in dem der Partikelaustragsstutzen 8 aufnehmbar ist. Außenseitig an dem Basisabschnitt 12 und um diesen umlaufend ist eine Ringnut 13 vorgesehen. Die Ringnut 13 ist im Querschnitt rechteckförmig. Um ein Aufschieben der Partikelaustragsvorrichtung 9A auf den Partikelaustragsstutzen 8 zu vereinfachen, ist in der Orientierung der Fig. 3 oberseitig an dem Basisabschnitt 12 eine Fase 14 vorgesehen, die vollständig um die Symmetrieachse 11 um läuft.

In der Orientierung der Fig. 3 unterhalb der Ringnut 13 und innenseitig an dem Basisabschnitt 12 vorgesehen ist ein um die Symmetrieachse 11 vollständig umlaufender Eingriffsabschnitt 15. Der Eingriffsabschnitt 15 kann eine Ringnut mit halbkreisförmigem Querschnitt sein. Der Partikelaustragsstutzen 8 weist einen zu dem Eingriffsabschnitt 15 korrespondierenden Gegeneingriffsabschnitt, beispielsweise in Form einer umlaufenden Rippe, auf, der geeignet ist, formschlüssig in den Eingriffsabschnitt 15 einzugreifen. Eine formschlüssige Verbindung entsteht durch das Ineinander- oder Hintergreifen von mindestens zwei Verbindungspartnern, vorliegend dem Eingriffsabschnitt 15 und dem Gegeneingriffsabschnitt des Partikelaustragsstutzens 8. Hierdurch kann die Partikelaustragsvorrichtung 9A verliersicher an dem Partikelaustragsstutzen 8 befestigt werden.

Der Basisabschnitt 12 weist der Fase 14 abgewandt einen vollständig um die Symmetrieachse 11 umlaufenden Ventilsitz 16 auf. Der Ventilsitz 16 kann im Querschnitt dreieckförmig sein. Der Ventilsitz 16 läuft ringförmig um die Symmetrieachse 11 um. Entlang einer Umfangsrichtung U des Gehäuses 10 betrachtet ist der Ventilsitz 16 ringförmig geschlossen. Der Ventilsitz 16 ist senkrecht zu der Symmetrieachse 11 orientiert. Unter "senkrecht" ist vorliegend ein Winkel von 90° ± 10°, bevorzugt von 90° ± 5°, weiter bevorzugt von 90° ± 3°, weiter bevorzugt von 90° ± 1°, weiter bevorzugt von genau 90°, zu verstehen.

Neben dem Basisabschnitt 12 umfasst das Gehäuse 10 einen senkrecht zu der Symmetrieachse 11 orientierten Mittelsteg 17, der endseitig beidseits mit dem Basisabschnitt 12 verbunden ist. Mit dem Mittelsteg 17 einteilig verbunden sind eine erste Partikelaustragsklappe 18 sowie eine zweite Partikelaustragsklappe 19. Die Partikelaustragsklappen 18, 19 können auch als Ventilteller, Partikelaustragslippen oder Partikelaustragsventilkörper bezeichnet werden. Die Partikelaustragsklappen 18, 19 sind elastisch verformbar und können von einem geschlossenen Zustand Z1, in dem die Partikelaustragsklappen 18, 19 an dem Ventilsitz 16 anliegen, in einen geöffneten Zustand Z2, in dem die Partikelaustragsklappen 18', 19' nicht an dem Ventilsitz 16 anliegen, verbracht werden. In dem geöffneten Zustand Z2 sind die Partikelaustragsklappen in der Fig. 3 mit den Bezugszeichen 18', 19' bezeichnet. In dem geschlossenen Zustand Z1 sind die Partikelaustragsklappen 18, 19 senkrecht zu der Symmetrieachse 11 orientiert. In dem geschlossenen Zustand Z1 sind die Partikelaustragsklappen 18, 19 innerhalb, insbesondere zumindest teilweise innerhalb, des Gehäuses 10 angeordnet.

Die Partikelaustragsvorrichtung 9A ist ein Kunststoffbauteil. Insbesondere ist die Partikelaustragsvorrichtung 9A ein Kunststoffspritzgussbauteil. Dabei ist die Partikelaustragsvorrichtung 9A ein einteiliges oder einstückiges, insbesondere materialeinstückiges, Bauteil. "Einteilig" oder "einstückig" bedeutet vorliegend, dass das Gehäuse 10 mit dem Basisabschnitt 12 und dem Mittelsteg 17 sowie die Partikelaustragsklappen 18, 19 ein gemeinsames Bauteil bilden und nicht aus unterschiedlichen Bauteilen zusammengesetzt sind. Das heißt, die Partikelaustragsklappen 18, 19, der Mittelsteg 17 und der Basisabschnitt 12 können nur durch eine Zerstörung derselben voneinander getrennt werden. "Materialstückig" bedeutet vorliegend, dass das Gehäuse 10 mit dem Basisabschnitt 12 und dem Mittelsteg 17 sowie die Partikelaustragsklappen 18, 19 durchgehend aus demselben Material gefertigt sind. Als Material für die Partikelaustragsvorrichtung 9A kommt beispielsweise Gummi, ein Ethylen-Propylen-Dien-Kautschuk (EPDM), ein Acrylnitril-Butadien-Kautschuk (NBR) oder ein thermoplastisches Elastomer (TPE), beispielsweise ein thermoplastisches Polyurethan (TPU), zur Anwendung.

Bei dem Herstellen der Partikelaustragsvorrichtung 9A wird diese als einteiliges Bauteil in einem Kunststoffspritzgusswerkzeug gefertigt. Nach einem Entformen der Partikelaustragsvorrichtung 9A aus dem Kunststoffspritzgusswerkzeug sind die Partikelaustragsklappen 18, 19 zunächst mit dem Ventilsitz 16 einteilig verbunden. Die Partikelaustragsklappen 18, 19 werden dann um die Symmetrieachse 11 umlaufend vollständig von dem Ventilsitz 16 getrennt. Hierzu wird ein trennendes Fertigungsverfahren eingesetzt. Beispielsweise kann zum Trennen der Partikelaustragsklappen 18, 19 ein Messer, eine Schneide, eine Trennscheibe, ein Laserstrahlschneideverfahren oder ein Wasserstrahltrennverfahren eingesetzt werden. Die Partikelaustragsklappen 18, 19 sind dann nur noch über den Mittelsteg 17 mit dem Gehäuse 10 verbunden. Im Bereich des Mittelstegs 17 kann jedoch auch eine Verbindung der Partikelaustragsklappen 18, 19 mit dem Ventilsitz 16 verbleiben.

Die Funktionalität der Partikelaustragsvorrichtung 9A ist wie folgt. Vor der Inbetriebnahme der Brennkraftmaschine befinden sich die Partikelaustragsklappen 18', 19' aufgrund ihrer elastischen Verformbarkeit und ihres Eigengewichts in dem geöffneten Zustand Z2. Sobald die Brennkraftmaschine in Betrieb genommen wird, erzeugt diese einen Unterdruck, der die Partikelaustragsklappen 18, 19 in den geschlossenen Zustand Z1 verbringt und diese gegen den Ventilsitz 16 saugt. Die von den Zyklonabscheidern 7 aus der Rohluft RO abgeschiedenen Partikel P sammeln sich auf den Partikelaustragsklappen 18, 19, die sich nach wie vor in ihrem geschlossenen Zustand Z1 befinden.

Die Partikelaustragsklappen 18, 19 werden entweder durch eine Gewichtskraft G der Partikel P und/oder durch einen Lastwechsel der Brennkraftmaschine von dem geschlossenen Zustand Z1 in den geöffneten Zustand Z2 verbracht. Die Partikel P können nun in der Schwerkraftrichtung g aus der Partikelaustragsvorrichtung 9A herausfallen. Sobald die Gewichtskraft G nicht mehr auf die Partikelaustragsklappen 18, 19 lastet beziehungsweise sobald der Lastwechsel beendet ist, werden die Partikelaustragsklappen 18, 19 von dem geöffneten Zustand Z2 in den geschlossenen Zustand Z1 verbracht. Der geöffnete Zustand Z2 wird beispielsweise wenige Bruchteile einer Sekunde bis wenige Sekunden aufrechterhalten.

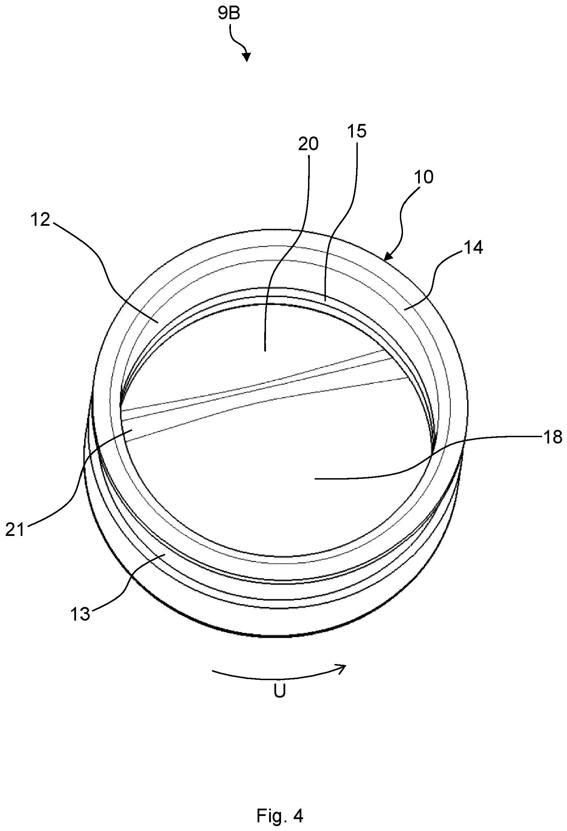

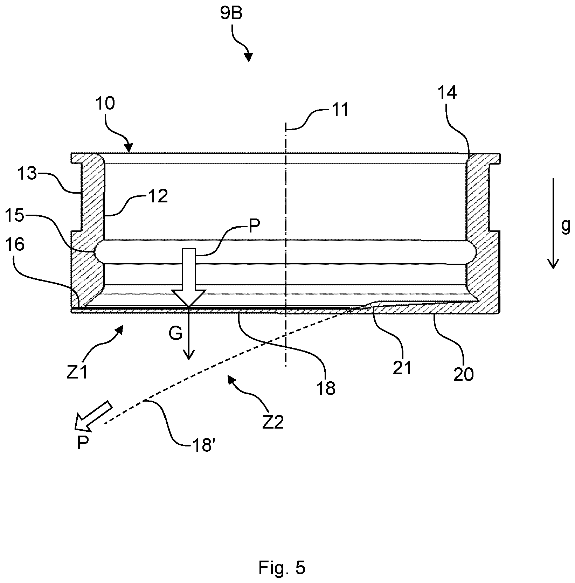

Die Fig. 4 zeigt eine schematische perspektivische Ansicht einer erfindungsgemäßen Ausführungsform einer Partikelaustragsvorrichtung 9B. Die Fig. 5 zeigt eine schematische Schnittansicht der Partikelaustragsvorrichtung 9B. Nachfolgend wird auf die Fig. 4 und 5 gleichzeitig Bezug genommen.

Die Partikelaustragsvorrichtung 9B umfasst wie die Partikelaustragsvorrichtung 9A ein Gehäuse 10, das rohrförmig ausgebildet ist und das rotationssymmetrisch zu einer Mitteloder Symmetrieachse 11 aufgebaut ist. Das Gehäuse 10 umfasst einen Basisabschnitt 12 mit einer wie zuvor erläuterten umlaufenden Ringnut 13, einer Fase 14, einem Eingriffsabschnitt 15 sowie einem Ventilsitz 16.

Im Unterschied zu der Partikelaustragsvorrichtung 9A ist der Ventilsitz 16 jedoch nicht vollständig umlaufend um die Symmetrieachse 11 ausgebildet. In einer Umfangsrichtung U des Gehäuses 10 betrachtet läuft der Ventilsitz 16 nur teilweise um die Symmetrieachse 11 um. Beispielsweise läuft der Ventilsitz 16 in der Umfangsrichtung U betrachtet um zwei Drittel eines Umfangs des Gehäuses 10 um die Symmetrieachse 11 um.

Das Gehäuse 10 umfasst neben dem Basisabschnitt 12 einen den Basisabschnitt stirnseitig teilweise verschließenden Boden 20. Der Boden 20 ist einteiilg, insbesondere materialeinstückig, mit dem Basisabschnitt 12 verbunden. An dem Boden 20 ist genau eine wie zuvor erläuterte Partikelaustragsklappe 18 vorgesehen, die elastisch verformbar ist. Die Partikelaustragsklappe 18 ist über einen Gelenkabschnitt 21 mit dem Boden 20 verbunden. Die Partikelaustragsklappe 18 weist dabei eine geringere Wandstärke auf als der Boden 20.

Im Unterschied zu der Partikelaustragsvorrichtung 9A weist die Partikelaustragsvorrichtung 9B somit nicht zwei Partikelaustragsklappen 18, 19, sondern nur eine Partikelaustragsklappe 18 auf. Der Boden 20 verschließt etwa ein Drittel einer Querschnittsfläche des Basisabschnitts 12. Die Partikelaustragsklappe 18 hingegen verschließt in einem geschlossenen Zustand Z1 derselben etwa zwei Drittel der Querschnittsfläche.

Wie zuvor erwähnt, ist die Partikelaustragsvorrichtung 9B ein einteiliges, insbesondere ein materialeinstückiges, Bauteil, insbesondere ein Kunststoffspritzgussbauteil. Die Partikelaustragsvorrichtung 9B ist bevorzugt ein Kunststoffspritzgussbauteil und kann beispielsweise aus Gummi, einem EPDM, einem NBR oder einem TPE gefertigt sein. Bei der Herstellung der Partikelaustragsvorrichtung 9B ist die Partikelaustragsklappe 18 zunächst einteilig mit dem Ventilsitz 16 verbunden.

Um ein Öffnen der Partikelaustragsklappe 18 zu ermöglichen, wird die Partikelaustragsklappe 18 nach einem Entformen der Partikelaustragsvorrichtung 9B aus einem Kunststoffspritzgusswerkzeug von dem Ventilsitz 16 getrennt. Dies kann, wie zuvor mit Bezug auf die Partikelaustragsvorrichtung 9A erläutert, mit Hilfe eines trennenden Fertigungsverfahrens durchgeführt werden.

Die Funktionalität der Partikelaustragsvorrichtung 9B entspricht im Wesentlichen der Funktionalität der Partikelaustragsvorrichtung 9A. Zunächst befindet sich die Partikelaustragsklappe 18' in einem geöffneten Zustand Z2. Bei der Inbetriebnahme der Brennkraftmaschine wird die Partikelaustragsklappe 18' von dem geöffneten Zustand Z2 in den geschlossenen Zustand Z1 verbracht, in welchem die Partikelaustragsklappe 18 an dem Ventilsitz 16 dichtend anliegt.

Sich im Betrieb der Brennkraftmaschine auf der Partikelaustragsklappe 18 ansammelnde Partikel P wirken mit ihrer Gewichtskraft G auf die Partikelaustragsklappe 18, die dadurch von dem geschlossenen Zustand Z1 in den geöffneten Zustand Z2 verbracht wird, wodurch die Partikel P ausgetragen werden können. Alternativ oder zusätzlich kann die Partikelaustragsklappe 18 auch durch einen Lastwechsel der Brennkraftmaschine von dem geschlossenen Zustand Z1 in den geöffneten Zustand Z2 und zurück verbracht werden.

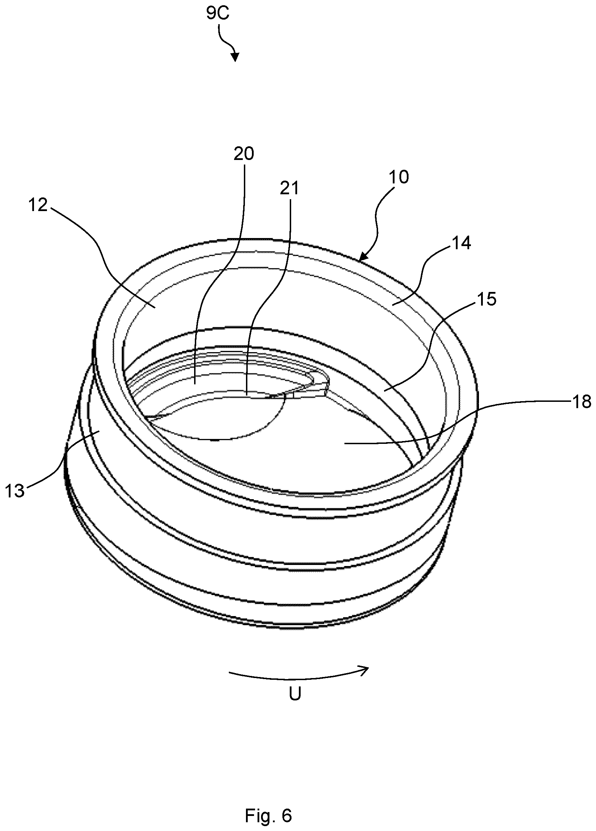

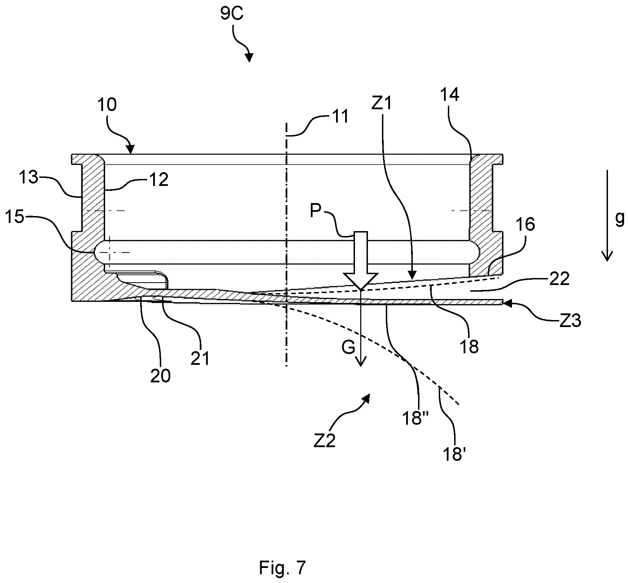

Die Fig. 6 zeigt eine schematische perspektivische Ansicht einer weiteren nicht erfindungsgemäßen Ausführungsform einer Partikelaustragsvorrichtung 9C. Die Fig. 7 zeigt eine schematische Schnittansicht der Partikelaustragsvorrichtung 9C.

Die Partikelaustragsvorrichtung 9C umfasst, wie die Partikelaustragsvorrichtungen 9A, 9B, ein Gehäuse 10, das rotationssymmetrisch zu einer Mittel- oder Symmetrieachse 11 aufgebaut ist, mit einem Basisabschnitt 12, der außenseitig eine umlaufenden Ringnut 13 und innenseitig eine Fase 14 und einen Eingriffsabschnitt 15 aufweist. Ferner ist an dem Basisabschnitt 12 ein Ventilsitz 16 vorgesehen. Der Ventilsitz 16 läuft wie bei der Partikelaustragsvorrichtung 9B nicht vollständig um die Symmetrieachse 11 um, sondern nur teilweise.

Das Gehäuse 10 ist, wie bei der Partikelaustragsvorrichtung 9B teilweise mit Hilfe eines Bodens 20 verschlossen. Der Boden 20 schließt etwa ein Drittel einer Querschnittsfläche des Basisabschnitts 12. An dem Boden 20 ist über einen Gelenkabschnitt 21 eine wie zuvor erläuterte Partikelaustragsklappe 18 angeformt. Die Partikelaustragsklappe 18 hingegen verschließt in einem geschlossenen Zustand Z1 derselben etwa zwei Drittel der Querschnittsfläche des Basisabschnitts 12.

Im Unterschied zu der Partikelaustragsvorrichtung 9B wird die Partikelaustragsvorrichtung 9C derart gefertigt, dass die Partikelaustragsklappe 18 nach einem Entformen der Partikelaustragsvorrichtung 9C aus einem Kunststoffspritzgusswerkzeug nicht einteilig mit dem Ventilsitz 16 verbunden ist. Hierzu ist zwischen dem Ventilsitz 16 und der Partikelaustragsklappe 18 ein schon in dem Kunststoffspritzgusswerkzeug vorgesehener Spalt 22 platziert. Das heißt, die Partikelaustragsklappe 18 muss nach dem Entformen der Partikelaustragsvorrichtung 9C nicht von dem Ventilsitz 16 getrennt werden.

Die Fig. 7 zeigt die Partikelaustragsklappe 18" in einem Entformungszustand Z3. In dem Entformungszustand Z3 ist die Partikelaustragsklappe mit dem Bezugszeichen 18" versehen. Von dem Entformungszustand Z3 kann die Partikelaustragsklappe 18" in den wie zuvor erläuterten geschlossenen Zustand Z1 und in einen wie zuvor erläuterten geöffneten Zustand Z2 verbracht werden. Der Entformungszustand Z3 befindet sich zwischen dem geschlossenen Zustand Z1 und dem geöffneten Zustand Z2.

Die Partikelaustragsvorrichtung 9C ist, wie die Partikelaustragsvorrichtungen 9A, 9B, ein einteiliges, insbesondere ein materialeinstückiges Bauteil, insbesondere ein Kunststoffspritzgussbauteil. Die Partikelaustragsvorrichtung 9C kann beispielsweise aus Gummi, einem EPDM, einem NBR oder einem TPE gefertigt sein.

Die zuvor erläuterten unterschiedlichen Ausführungsformen der Partikelaustragsvorrichtung 9A, 9B, 9C vereinen ein gutes Austragsverhalten bei geringem Bauvolumen entlang der Symmetrieachse 11 betrachtet. Mit Hilfe der Partikelaustragsklappe 18 oder der Partikelaustragsklappen 18, 19 kann ein großer offener Austragsquerschnitt erreicht werden. Hierdurch ist die Austragsleistung sehr gut und die Verstopfungsgefahr sehr gering.

Im Betrieb der jeweiligen Partikelaustragsvorrichtung 9A, 9B, 9C zeigt sich ein kontinuierlicher Austrag der Partikel P. Die Zunahme der Gewichtskraft G auf die Partikelaustragsklappe 18 oder auf die Partikelaustragsklappen 18, 19 durch die abgeschiedenen Partikel P bewirkt ein schlagartiges Öffnen der jeweiligen Partikelaustragsvorrichtung 9A, 9B, 9C. Bei dem Öffnen wird ein großer Querschnitt des Partikelaustragsstutzens 8 freigegeben, wodurch die Partikel P zuverlässig ausgetragen werden.

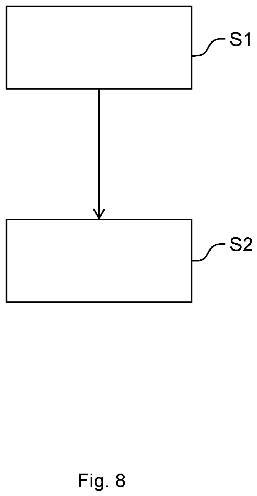

Die Fig. 8 zeigt ein schematisches Blockdiagramm einer Ausführungsform eines Verfahrens zum Herstellen der wie zuvor erläuterten Partikelaustragsvorrichtungen 9A, 9B, 9C. Bei dem Verfahren wird zunächst in einem Schritt S1 das Gehäuse 10 hergestellt. Gleichzeitig wird in einem Schritt S2 zumindest eine einteilig mit dem Gehäuse 10 ausgebildete Partikelaustragsklappe 18, 19 hergestellt. Die Schritte S1 und S2 werden vorzugsweise gleichzeitig mit Hilfe eines Kunststoffspritzgusswerkzeugs durchgeführt.

Nach oder bei dem Schritt S2 kann die zumindest eine Partikelaustragsklappe 18, 19 mit Hilfe eines trennenden Fertigungsverfahrens von dem Ventilsitz 16 des Gehäuses 10 getrennt werden. Für das trennende Fertigungsverfahren kann beispielsweise eine Schneide, ein Messer oder eine Trennscheibe verwendet werden. Alternativ kann jedoch auch ein Lasertrennverfahren oder ein Wasserstrahltrennverfahren eingesetzt werden. Ferner kann, wie zuvor erwähnt, bereits in dem Kunststoffspritzgusswerkzeug der Spalt 22 vorgesehen werden, so dass ein Trennen der zumindest einen Partikelaustragsklappe 18, 19 von dem Ventilsitz 16 verzichtbar ist.

### Verwendete Bezugszeichen:

- 1: Filteranordnung
- 2: Filtergehäuse
- 3: Filtergehäusetopf
- 4: Filtergehäusedeckel
- 5: Befestigungsabschnitt
- 6: Befestigungsabschnitt
- 7: Zyklonabscheider
- 8: Partikelaustragsstutzen
- 9: Partikelaustragsvorrichtung
- 9A: Partikelaustragsvorrichtung
- 9B: Partikelaustragsvorrichtung
- 9C: Partikelaustragsvorrichtung
- 10: Gehäuse
- 11: Symmetrieachse
- 12: Basisabschnitt
- 13: Ringnut
- 14: Fase
- 15: Eingriffsabschnitt
- 16: Ventilsitz
- 17: Mittelsteg
- 18: Partikelaustragsklappe
- 18': Partikelaustragsklappe
- 18": Partikelaustragsklappe
- 19: Partikelaustragsklappe
- 19': Partikelaustragsklappe
- 20: Boden
- 21: Gelenkabschnitt
- 22: Spalt

- g: Schwerkraftrichtung
- G: Gewichtskraft
- RL: Reinluft
- RO: Rohluft
- P: Partikel
- S1: Schritt
- S2: Schritt
- U: Umfangsrichtung
- Z1: Zustand
- Z2: Zustand
- Z3: Entformungszustand

## Patentansprüche

1. Partikelaustragsvorrichtung (9B) für eine Filteranordnung (1), mit einem Gehäuse (10) und zumindest einer einteilig mit dem Gehäuse (10) ausgebildeten Partikelaustragsklappe (18, 18', 19, 19'), wobei die zumindest eine Partikelaustragsklappe (18, 18', 19, 19') zum Austragen von Partikeln (P) aus der Filteranordnung (1) von einem geschlossenen Zustand (Z1) in einen geöffneten Zustand (Z2) verbringbar ist, und wobei die zumindest eine Partikelaustragsklappe (18, 18', 19, 19') in dem geschlossenen Zustand (Z1) an einem zumindest teilweise um eine Symmetrieachse (11) des Gehäuses (10) umlaufenden Ventilsitz (16) des Gehäuses (10) anliegt, wobei die Symmetrieachse (11) parallel zu einer Schwerkraftrichtung orientiert ist und die Partikelaustragsvorrichtung (9B) ferner einen Boden (20), welcher das Gehäuse (10) stirnseitig zumindest teilweise verschließt, und genau eine Partikelaustragsklappe (18, 18') umfasst, welche einteilig mit dem Boden (20) verbunden ist und in dem geschlossenen Zustand (Z1) senkrecht zu der Symmetrieachse (11) orientiert ist, und wobei die Partikelaustragsvorrichtung (9B) ein aus einem Elastomer gefertigtes einteiliges Kunststoffspritzgussbauteil ist.

2. Partikelaustragsvorrichtung nach Anspruch 1, wobei die Partikelaustragsklappe (18, 18', 19, 19') zum Verbringen derselben von dem geschlossenen Zustand (Z1) in den geöffneten Zustand (Z2) elastisch verformbar ist.

3. Partikelaustragsvorrichtung nach Anspruch 1 oder 2, wobei die Partikelaustragsklappe (18, 18', 19, 19') mit Hilfe einer auf die zumindest eine Partikelaustragsklappe (18, 18', 19, 19') wirkenden Gewichtskraft (G) der Partikel (P) von dem geschlossenen Zustand (Z1) in den geöffneten Zustand (Z2) verbringbar ist.

4. Filteranordnung (1) mit einem Filtergehäuse (2) und einer Partikelaustragsvorrichtung (9B) nach einem der Ansprüche 1 - 3, welche an einem Partikelaustragsstutzen (8) des Filtergehäuses (2) angeordnet ist.

5. Verfahren zum Herstellen einer Partikelaustragsvorrichtung (9B) nach einem der Ansprüche 1 - 3, mit den Schritten:
a) Herstellen (S1) eines Gehäuses (10), und
b) Herstellen (S2) zumindest einer einteilig mit dem Gehäuse (10) ausgebildeten Partikelaustragsklappe (18, 18', 19, 19'), wobei nach oder bei dem Schritt b) die zumindest eine Partikelaustragsklappe (18, 18', 19, 19') mit Hilfe eines trennenden Fertigungsverfahrens von einem Ventilsitz (16) des Gehäuses (10) getrennt wird.

## Claims

1. A particulate discharge device (9B) for a filter assembly (1), having a housing (10) and at least one particulate discharge flap (18, 18', 19, 19') designed in one piece with the housing (10), wherein the at least one particulate discharge flap (18, 18', 19, 19') can be moved from a closed state (Z1) to an open state (Z2) for discharging particulate matter (P) from the filter assembly (1) and wherein the at least one particulate discharge flap (18, 18', 19, 19') rests, in the closed state (Z1), against a valve seat (16) of the housing (10), said valve seat extending at least partially around a symmetry axis (11) of the housing (10), wherein the symmetry axis (11) is oriented parallel to a direction of gravity and the particulate discharge device (9B) furthermore comprises a bottom (20) which at least partially closes the front face of the housing (10), and precisely one particulate discharge flap (18, 18') connected in one piece to the bottom (20) and oriented perpendicular to the symmetry axis (11) in the closed state (Z1), and wherein the particulate discharge device (9B) is a plastic injection molded component made of an elastomer in one piece.

2. The particulate discharge device according to claim 1, wherein the particulate discharge flap (18, 18', 19, 19') is elastically deformable for moving it from the closed state (Z1) to the open state (Z2).

3. The particulate discharge device according to claim 1 or 2, wherein the particulate discharge flap (18, 18', 19, 19') can be moved from the closed state (Z1) to the open state (Z2) using a weight (G) of the particulates (P) acting on the at least one particulate discharge flap (18, 18', 19, 19').

4. A filter assembly (1) having a filter housing (2) and a particulate discharge device (9B) according to one of the claims 1 to 3, which is disposed on a particulate discharge nozzle (8) of the filter housing (2).

5. A method for manufacturing a particulate discharge device (9B) according to one of the claims 1 to 3, comprising the steps of:
a) manufacturing (S1) a housing (10), and
b) manufacturing (S2) at least one particulate discharge flap (18, 18', 19, 19') designed in one piece with the housing (10), wherein after or during the step b) the at least one particulate discharge flap (18, 18', 19, 19') is separated from a valve seat (16) of the housing (10) using a separating manufacturing method.

## Revendications

1. Dispositif d'évacuation de particules (9B) pour un agencement de filtre (1), ayant un boîtier (10) et au moins une trappe d'évacuation de particules (18, 18', 19, 19') réalisée d'un seul tenant avec le boîtier (10), dans lequel la trappe d'évacuation de particules (18, 18', 19, 19'), au moins au nombre d'une, peut être déplacé d'un état fermé (Z1) à un état ouvert (Z2) pour évacuer des particules (P) de l'agencement de filtre (1), et dans lequel la trappe d'évacuation de particules (18, 18', 19, 19'), au moins au nombre d'une, repose, à l'état fermé (Z1), sur un siège de soupape (16) du boîtier (10), ledit siège de soupape s'étendant au moins partiellement autour d'un axe de symétrie (11) du boîtier (10), dans lequel l'axe de symétrie (11) est orienté parallèlement à une direction de la force de gravité et le dispositif d'évacuation de particules (9B) comprend en outre un fond (20) fermant au moins partiellement le boîtier (10) sur sa face frontale, et exactement une trappe d'évacuation de particules (18, 18') reliée d'un seul tenant au fond (20) et orientée perpendiculairement à l'axe de symétrie (11) dans l'état fermé (Z1), et dans lequel le dispositif d'évacuation de particules (9B) est un composant en plastique moulé par injection d'un seul tenant, fabriqué à partir d'un élastomère.

2. Dispositif d'évacuation de particules selon la revendication 1, dans lequel la trappe d'évacuation de particules (18, 18', 19, 19') est élastiquement déformable pour la faire passer de l'état fermé (Z1) à l'état ouvert (Z2).

3. Dispositif d'évacuation de particules selon la revendication 1 ou 2, dans lequel la trappe d'évacuation de particules (18, 18', 19, 19') peut être déplacée de l'état fermé (Z1) à l'état ouvert (Z2) à l'aide du poids (G) des particules (P) appliqué sur la trappe d'évacuation de particules (18, 18', 19, 19'), au moins au nombre d'une.

4. Ensemble de filtre (1) ayant un boîtier de filtre (2) et un dispositif d'évacuation de particules (9B) selon l'une quelconque des revendications 1 à 3 disposé sur une tubulure d'évacuation de particules (8) du boîtier de filtre (2).

5. Procédé de fabrication d'un dispositif d'évacuation de particules (9B) selon l'une quelconque des revendications 1 à 3, comprenant les étapes suivantes:
a) fabrication (S1) d'un boîtier (10), et
b) fabrication (S2) d'au moins une trappe d'évacuation de particules (18, 18', 19, 19') réalisée d'un seul tenant avec le boîtier (10), dans lequel, après ou lors de l'étape b), la trappe d'évacuation de particules (18, 18', 19, 19'), au moins au nombre d'une, est séparée d'un siège de soupape (16) du boîtier (10) à l'aide d'un procédé de finition par séparation.
